# EUROPEAN PATENT APPLICATION

(11) **EP 4 650 840 A1**
(43) Date of publication of application: **19.11.2025**
(21) Application number: 25172266.6
(22) Date of filing: 24.04.2025
(51) Int. Cl.: G02B 6/44

(54) **A FIBER OPTICAL STORAGE EQUIPMENT**

(30) Priority: 16.05.2024 IT 202400011113
(71) Applicant: Prysmian S.p.A., 20126 Milan (IT)
(72) Inventor: Abbiati, Fabio, 20126 Milano (IT)
(74) Representative: Perani & Partners S.p.A.

(57) **Abstract**

A fiber optical storage equipment(1) comprising a base member (10) comprising a base (11) and a perimetral wall (12) extending upwardly from the base (11); a cover member (20) configured to define with the base member (10) an inner volume; a support shaft (30) at least in part surrounded by the perimetral wall (12) and extending into the inner volume between the base (11) and an end shaft portion (31) along a longitudinal direction (X-X) perpendicular to the base (11); an optical fiber spool (40) for winding and unwinding an optical cable (2), the optical fiber spool (40) being configured to longitudinally move along the support shaft (30) and to rotate around the support shaft (30), the optical fiber spool (40) being movable along the longitudinal direction (X-X) between a first position, where the optical fiber spool (40) is at least in part surrounded by the perimetral wall (12), and a second position, where the optical fiber spool (40) is longitudinally spaced apart from the perimetral wall (12), the optical fiber spool (40) being free to rotate for winding and unwinding in the second position; the optical fiber spool (40) comprises an adapter housing (50) for an optical adapter (3), the adapter housing (50) projecting towards the base (11) and being proximate to the base (11) in the first position.

## Description

### Field of the invention

The present invention relates to the field of equipment and components for the installation of optical cables in optical networks. In particular, the present invention relates to a fiber optical storage equipment for containing and storing optical fibers that are routed to the fiber optical network users.

### Background of the invention

A FTTR (Fiber to the Room) network refers to the way optical fibers are connected between one or more terminals and a distribution box, which is the basic technology of optical Fiber access in buildings with offices and apartments.

Typically, installation operations of FTTR networks are complex for the correct positioning of the optical cables in the building and relative components and then managed by professionals.

In FTTR applications, a fiber optical storage equipment can be used to regulate the length of the optical cable for a relative connection to a terminal. The typical fiber optical storage equipment involved comprises a spool and relative adapter housing and, in some cases, also a connector housing which are arranged in a relative equipment. The mutual arrangement of the above components in the known fiber optical storage equipment causes problems in cable management, reduces the confront of the users, limits the available space being space consuming. It is to be noted that in the attempt to save space, the fiber optical storage equipment of the state of art provides complex solutions for optical cable, adapter and connector housing, causing undesired bending of the fiber and difficulties in their managing. Furthermore, during installation, inspection and maintenance operations, there are significant risks of fiber damage as well as problems for the operator to correctly operate in the fiber optical storage equipment of the state of art.

EP3367149 discloses an optical fiber storage module having a base, and a wall having an opening for paying out an optical fiber from inside the module. Spool retention fingers extend from the base. One or more fingers have a first rim at a first height above the base, and one or more fingers have a second rim at a second height above the base. A fiber supply spool has a hub and an annular support disk inside the hub which forms a third rim. The spool is movable on the retention fingers between a first position where the third rim of the support disk is captured between the first and the second rims on the retention fingers, thus allowing the spool to turn when fiber is unwound, and a second position where the spool engages one or more bosses formed on the module base to lock the spool from further rotation.

US9904026B2 discloses a module for optical fiber installation and storage at customer premises has a base, and a fiber supply spool mounted for rotation on the base. An elongated adapter plate has a front-end portion for mounting a connector adapter. A rear end portion of the adapter plate has first hinge parts at one side of the plate, and the fiber supply spool has second hinge parts for engaging the first hinge parts of the plate to define a hinge axis. The adapter plate can swivel about the hinge axis between a position where the plate lies flush on the supply spool and the spool can turn as fiber unwinds, and a position where a port of a connector adapter mounted on the plate is accessible for connection to an outside device when the module is closed, and the plate engages the module base to restrain the spool from rotation.

EP3123225 discloses an optical port including a base capable of being attached substantially parallel to a planar surface, a spool arranged so as to rotate about a shaft which is substantially perpendicular to the base, an optical cable rolled up into the spool; and a connector, one inner side of which is connected inside the port to a first end, referred to as the "inner end", of the cable. An outer side of the connector is intended to be connected to an outer optical connection plug. The cable is intended to be unreeled out from the port by pulling one second end, referred to as the "outer end", of the cable. The pulling rotates the spool on the shaft. The connector is secured to the spool and arranged to take at least one position outside the radial configuration of the spool.

EP2883100 discloses a fiber optic splicing assembly mountable to a mounting wall with a mounting hole, comprising: a splicing panel of which a front side is configured to mount a fiber optic splicing device for splicing fibers; a fiber storing device configured to be at least partially received in the mounting hole, one end of the fiber storing device is removably mounted to the splicing panel. A reel of the fiber storing device has a contracting state where the reel is contracted within the mounting hole and an expansion state where the reel is extended out of the mounting hole. A cable or fiber having sufficient length is pre-stored in the reel before installing the splicing panel, an operator can conveniently and quickly pull the cable or fiber from the fiber optic splicing assembly and manage and operate the redundant cable or fiber.

EP2963469 discloses a fiber optic enclosure assembly for enclosing optical fiber connections comprising an enclosure including a housing having an interior region, a cable spool disposed in the interior region, the cable spool includes a spooling portion, around which a first cable is coiled, the first cable being paid out from the fiber optic enclosure by rotating the cable spool about an axis of the housing of the enclosure until a desired length of the first cable is paid out, the cable spool further including an axial end, the axial end of the cable spool defining a termination area. An axial end of the cable spool defines a cable passage, and the axial end of the cable spool defines a slack storage area.

US10359590 discloses an assembly for deploying fiber optic cable including a housing which defines a cavity and comprises a wall. The wall defines an opening allowing a fiber optic cable to pass. The assembly also includes a spool configured to store a portion of the fiber optic cable. The spool is rotatably coupled to the housing within the cavity of the housing. The assembly also includes a component module releasably coupled to the housing and comprising an adapter configured to optically couple the fiber optic cable to another fiber optic cable.

### Summary of the invention

The Applicant has tackled the problem of optimizing the arrangement of the adapter housing on the spool with respect to the base whereby optical cable management is simplified as well as the overall space of the fiber optical storage equipment is reduced, thereby saving space.

The Applicant has found that providing a fiber optical storage equipment having a base module, a support shaft and a fiber optical spool movable with respect to the shaft comprising an adapter housing projecting towards the base part of the base module, optimizes and improves the fiber management and at the same time saves space.

Therefore, according to one aspect, the present invention relates to a fiber optical storage equipment comprising: a base member comprising a base and a perimetral wall extending upwardly from the base, a cover member configured to define with the base member an inner volume, a support shaft at least in part surrounded by the perimetral wall and extending into the inner volume between the base and an end shaft portion along a longitudinal direction perpendicular to the base, an optical fiber spool for winding and unwinding an optical cable, the optical fiber spool being configured to longitudinally move along the support shaft and to rotate around the support shaft, the optical fiber spool being movable along the longitudinal direction between a first position, where the optical fiber spool is at least in part surrounded by the retaining wall, and a second position, where the optical fiber spool is longitudinally spaced apart from the retaining wall, the optical fiber spool being free to rotate for winding and unwinding in the second position. The optical fiber spool comprises an adapter housing for an optical adapter, the adapter housing projecting towards the base and being proximate to the base in the first position.

According to one embodiment, the optical fiber spool comprises a hub and first retaining wings and second retaining wings outwardly projecting from the hub, the first retaining wings and the second retaining wings being configured to accommodate therebetween an optical cable wound around the hub. The adapter housing is formed on a first retaining wing, the adapter housing projecting from the first retaining wing towards the base.

According to one embodiment, the support shaft comprises a hollow shaft channel, the hub is rotationally and slidingly coupled with the support shaft, the hub comprising a hollow hub channel extending along the longitudinal direction from a first hub end portion arranged at the base in the first position to an opposite second hub end portion and configured to receive the support shaft, the first retaining wings and the second retaining wings extend between the hub and free wing ends respectively at the first hub end portion and at the second hub end portion.

According to one embodiment, the perimetral wall comprises a retaining aperture configured to engage at least a retaining portion of a first retaining wing to prevent the rotation of the fiber optical spool when the fiber optical spool is in the first position and to disengage the retaining portion upon the fiber optical spool is moved in the second position.

According to one embodiment, the fiber optical storage equipment further comprises a longitudinal limiting and rotational arrangement for longitudinally limiting the fiber optical spool at the first and second position and allowing rotation of the fiber optical spool around the support shaft, the longitudinal limiting and rotation arrangement comprises: a first limiting member formed on the support shaft within the hollow shaft channel, a second limiting member extending into the hub channel and spaced apart from the hub along a spacing direction perpendicular to the longitudinal direction, the second limiting member defining with the hub an annular gap configured to receive therebetween the support shaft, a third limiting member formed on the second limiting member and configured to engage the first limiting member at the second position to limit a sliding of the fiber optical spool in the second position and to allow a rotation of the fiber optical spool.

According to one embodiment, the first limiting member comprises a flange inwardly projecting in the hollow shaft channel at the end shaft portion, the second limiting member comprises a plurality of retention fingers extending along the longitudinal direction and spaced apart from the hub between a connection end portion connected to the hub at the second hub end portion and an opposed free retention end portion, the third limiting member comprises a retaining element for each retention finger configured to engage the flange to limit the sliding of the fiber optical spool at the end shaft portion and to allow the relative rotation, each retaining element outwardly projecting at the free retention end portion towards the shaft.

According to one embodiment, the longitudinal limiting and rotational arrangement comprises a fourth limiting member outwardly projecting from the hub at the first hub end portion, a fifth limiting member projecting from the base and configured to engage the fourth limiting member when the fiber optical spool is in the first position to prevent longitudinal sliding of the fiber optical spool.

According to one embodiment, the fiber optical storage equipment further comprises restraining elements configured to restrain the wound optical cable and hinged to the free wing end of at least one of the first retaining wings and the second retaining wings, each restraining element being configured to move between a restraining configuration and a rotation configuration respectively when the fiber optical spool is in the first position and in the second position, locking elements, the restraining elements being configured to engage the locking elements in restraining configuration and to disengage the locking elements in the rotation configuration.

According to one embodiment, each restraining element is formed on a respective second retaining wing, the perimetral wall has an inner surface and an outer surface, the locking elements being formed on the outer surface of the perimetral wall.

According to one embodiment, a restraining element comprises a connector housing for retaining an optical connector.

According to one embodiment, the second retaining wings are shaped as sector of circular annulus and are angularly spaced apart, the first retaining wings are shaped as truncated sector of circular annulus and are angularly spaced apart, each first retaining wing has a radial side and a truncation side forming with a radial direction an angle in a range of 30° to 60°, the first retaining wings are angularly offset with respect to the second retaining wings.

According to one embodiment, the base module comprises a seat in the base for the adapter housing configured to receive the adapter housing when the fiber optical spool is in the first position.

According to one embodiment, the perimetral wall has one or more cable openings for receiving an optical cable, the base module comprises cable retaining members externally to the perimetral wall to retain the optical cable passing through one of the cable openings, the cover member has first openings at the cable retaining members for receiving the optical cable passing through the cable openings, the cover member has a second opening at the adapter housing for receiving an optical connector to be inserted in the optical adapter.

The present invention further relates to fiber optical storage equipment assembly comprising the fiber optical storage equipment of the present invention, an optical adapter arranged in the adapter housing, an optical cable having, at one end, a connector to be connected to the optical adapter and, at the other end, an optical connector to be connected to a termination equipment.

### Brief description of the drawings

The present invention will now be described in more detail hereinafter with reference to the accompanying drawings, in which exemplary embodiments of the invention are shown:
FIG. 1 is a perspective view of the fiber optical storage equipment assembly with an optical spool in a first position according to one embodiment of the invention with some parts removed;
FIG. 2 is a sectional view of the fiber optical storage equipment of Fig. 1;
FIG. 3 is a perspective view of the fiber optical storage equipment assembly with an optical spool in a second position according to one embodiment of the invention with some parts removed;
FIG. 4 is a sectional view of the fiber optical storage equipment of Fig.3;
FIG. 5 is a perspective view of the optical spool according to one embodiment of the invention;
FIG. 6 is a upper view of the optical spool of FIG.5;
FIG. 7 is a perspective view of the fiber optical storage equipment assembly according to one embodiment of the invention.

### Detailed description

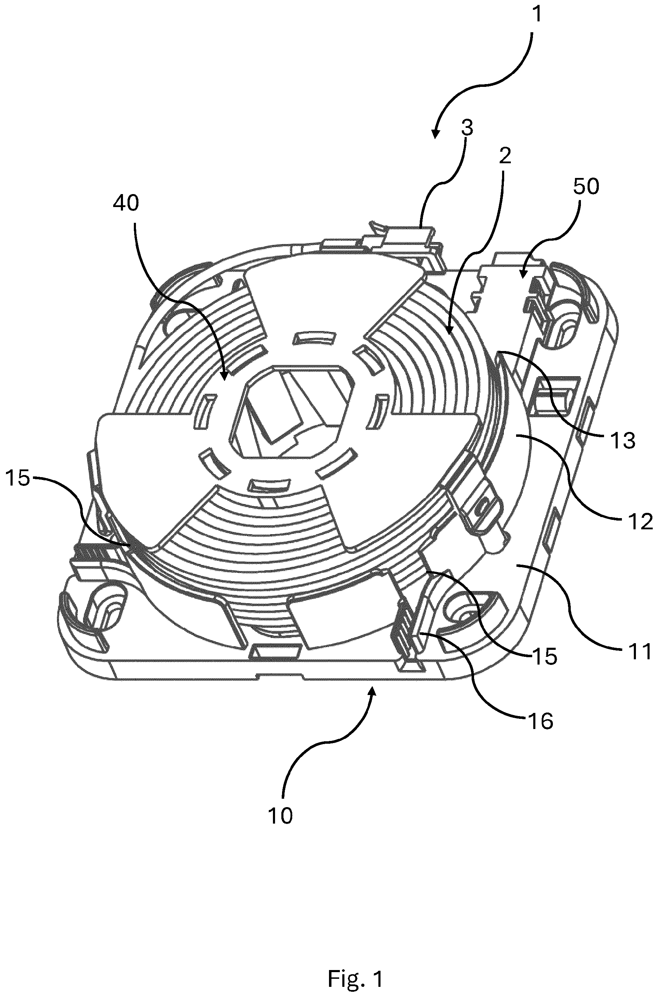

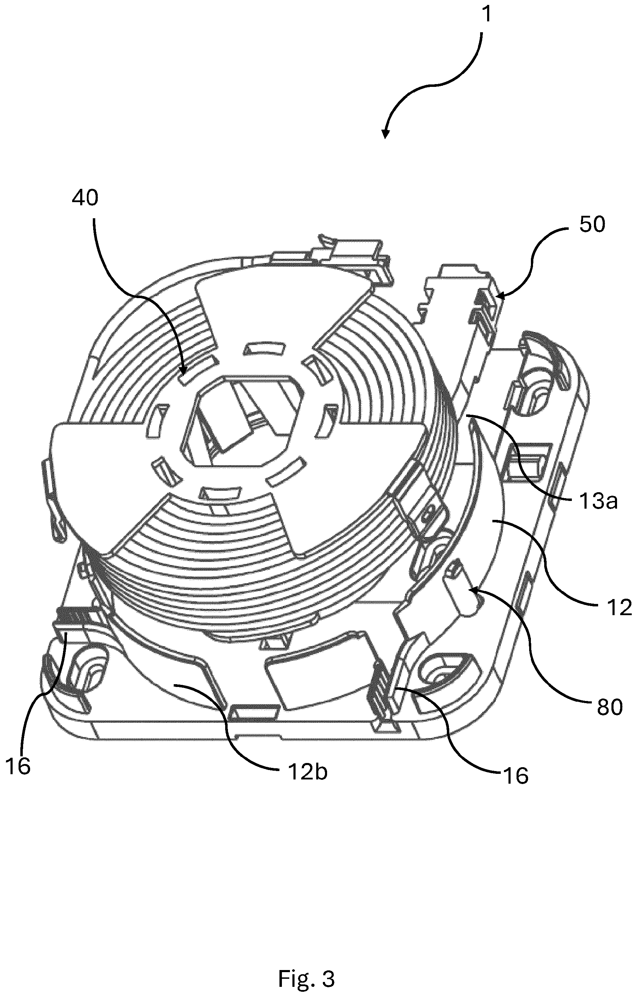

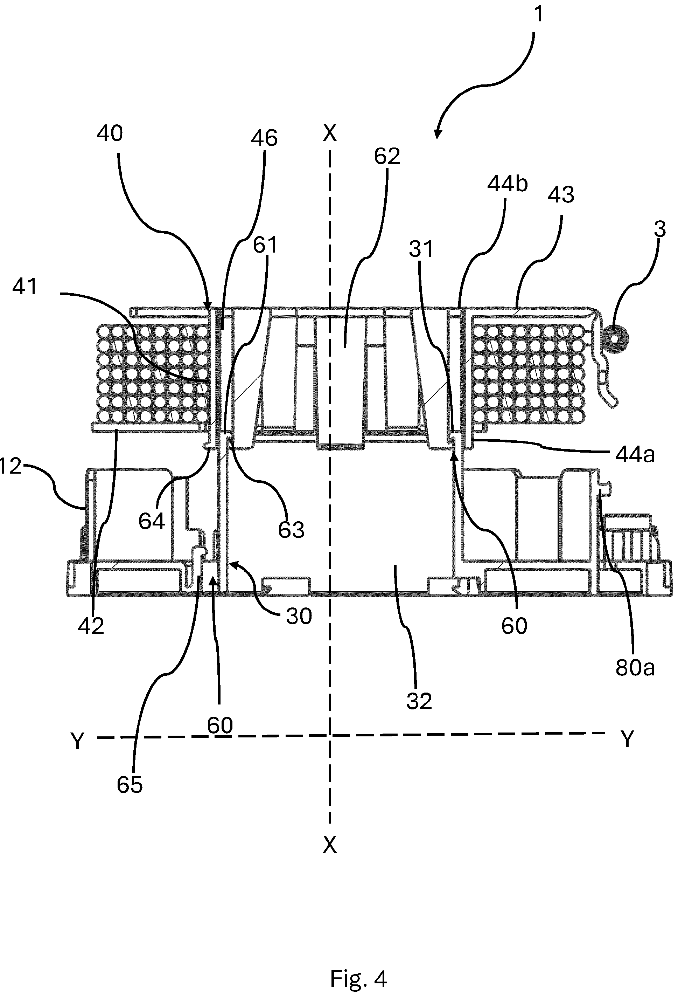

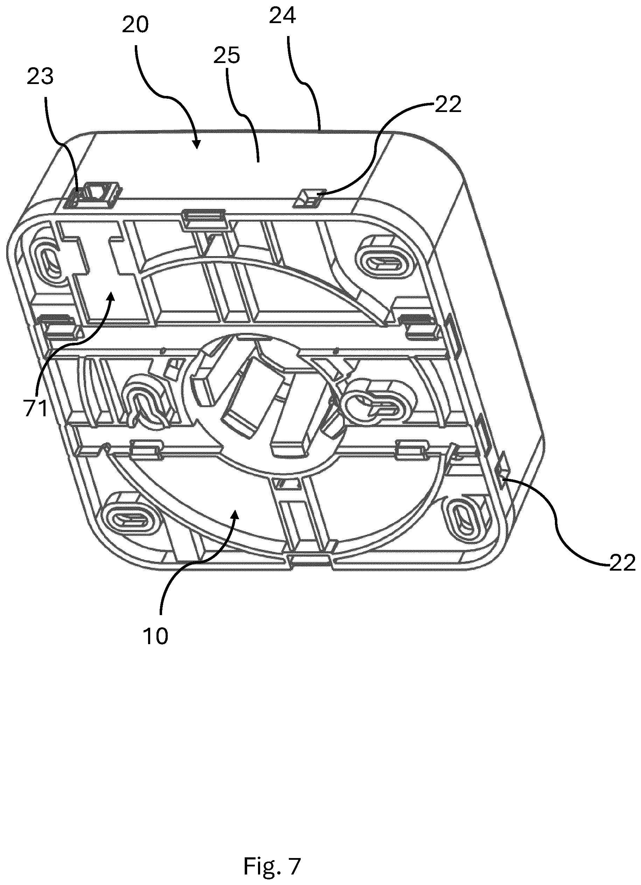

Figures 1-4 and 7 show a fiber optical storage equipment 1.

The fiber optical storage equipment 1 comprises a base member 10 configured to receive an optical cable 2 to be wound and unwound.

The optical cable 2 extends between end portions and can comprise at one end portion a connector to be connected to an optical adapter 3 and at the other end a connector 4 to be connected to a termination box.

The base member 10 comprises a base 11 and a perimetral wall 12 extending upwardly from the base 11.

The fiber optical storage equipment 1 comprises a cover member 20 configured to define with the base member 10 an inner volume. The cover member 20 can comprise a cover ceiling 24 and a cover lateral wall 25 extending from the cover ceiling 24 and defining a cover opening opposed to the cover ceiling 24. The cover ceiling 24 and the cover lateral wall 25 defines an open housing.

The base member 10 is configured to couple with the cover member 20 at the cover opening.

The cover member 20 is removably associated to base member 10. Namely, the base member 10 is configured to close the open housing.

The base member 10 together with the cover member 20 define a fiber optical storage box.

The base member 10 is configured to receive an optical cable 2 entering in the inner volume and exiting from the inner volume.

Alternatively, the fiber optical storage equipment 1 can be free of the cover member 20.

The fiber optical storage equipment 1 comprises a support shaft 30 at least in part surrounded by the perimetral wall 12 and extending into the inner volume between the base member 11 and an end support portion 31 along a longitudinal direction X-X perpendicular to the base 11.

Namely, the support shaft 30 has a shaft height from the base 11 and the perimetral wall 12 has wall height wherein the shaft height is greater than wall height.

According to one embodiment, the support shaft 30 comprises a hollow shaft channel 32.

The fiber optical storage equipment 1 comprises an optical fiber spool 40 for winding and unwinding an optical cable 2. It is to be noted that the optical fiber spool 40 has a spool height that is greater than the wall height and lower than shaft height.

The optical fiber spool 40 is configured to longitudinally move along the support shaft 30 and to rotate around the support shaft 30.

The optical fiber spool 40 is movable along the longitudinal direction X-X between a first position, where the optical fiber spool 40 is at least in part surrounded by the perimetral wall 12, and a second position, where the optical fiber spool 40 is longitudinally spaced apart from the perimetral wall 12.

The optical fiber spool 40 is free to rotate for winding and unwinding in the second position.

The optical fiber spool 40 comprises an adapter housing 50 for an optical adapter 3. The adapter housing 50 projects towards the base 11 and is proximate to the base 11 in the first position.

According to one embodiment, the base module 10 comprises a seat 14 in the base 11 for the adapter housing 50 configured to receive the adapter housing 50 when the fiber optical spool 40 is in the first position.

Thanks to the adapter housing 50 arrangement, the fiber optical storage equipment 1 makes simpler and more convenient the automatic loading of the optical cable 2 or patch cords (or pigtail, -- Outer Diameter 0.6-3mm) because the operator can easily reach the adapter housing and then the relative adapter. Moreover, the presence of the adapter on the fiber optical spool 40 simplifies the installation since the connector is already inserted into the adapter and a fixed position for the fiber optical spool is set.

According to one embodiment, the optical fiber spool 40 comprises a hub 41 and first retaining wings 42 and second retaining wings 43 outwardly projecting from the hub 41. Namely, the first retaining wings 42 and second retaining wings 43 extend between the hub 41 and free wing ends 42a, 43a. The first retaining wings 42 and the second retaining wings 43 are configured to accommodate therebetween an optical cable 2 wound around the hub 41.

The first retaining wings 42 and second retaining wings 43 are mutually spaced apart along the longitudinal direction X-X.

According to embodiment, the adapter housing 50 is formed on a first retaining wing 42. Namely, the adapter housing 50 projects from the first retaining wing 42 towards the base 11.

The adapter housing 50 is configured to define a retaining volume to receive and retain an adapter 3. The adapter housing 50 extends between two receiving openings 50a, 50b defined by the first wing 42 and lateral walls 50c projecting from the wing 42. Such lateral walls 50c can comprise adapter seats configured to receive adapter retaining members formed on relative outer surface.

It is to be noted that the lateral walls 50c can be elastically deformable to receive and retain the adapter 50 upon the insertion in the relative seat.

The adapter housing 50 can be formed in one piece with the first wing 42.

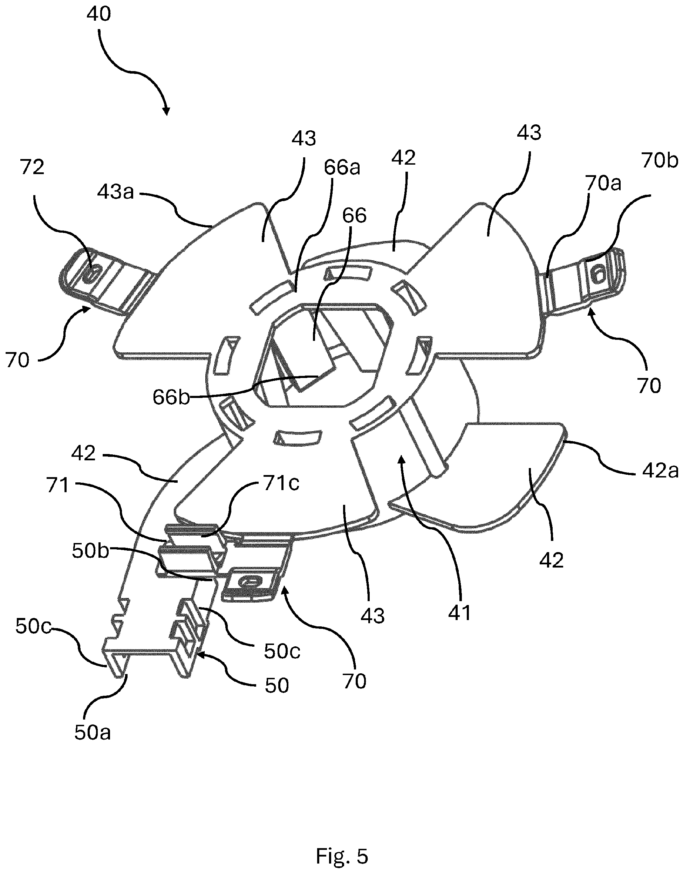

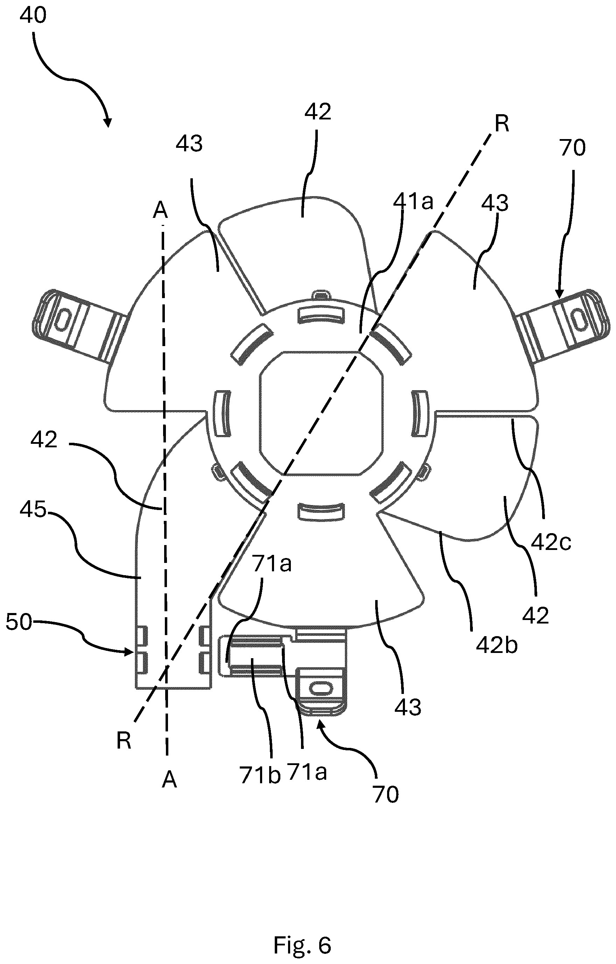

According to one embodiment as shown in figures 5 and 6, the second retaining wings 43 are shaped as sector of circular annulus and are angularly spaced apart. The first retaining wings 42 are shaped as truncated sector of circular annulus and are angularly spaced apart. Namely, each first retaining wing 42 has a radial side 42c and a truncation side 42b forming with a radial direction an angle in a range of 30° to 60°, preferably 45°.

Namely, the hub 41 has an inner radius and the retaining wings 42, 43 have an outer radius at the free wing end 42a, 43a wherein the outer radius is greater than the inner radius. The inner and outer radius define relative inner and outer circumferences. The retaining wings 42, 43 extend between the inner and the outer circumferences, within the relative annulus defined between the inner and the outer circumferences.

The first retaining wings 42 are angularly offset with respect to the second retaining wings 43.

Thanks to the shape of the wings, damages during cable winding and unwinding can be avoided.

According to one embodiment, the hub 41 is rotationally and slidingly coupled with the support shaft 30. The hub 41 comprises a hollow hub channel 44 extending along the longitudinal direction X-X from a first hub end portion 44a arranged at the base 11 in the first position to an opposite second hub end portion 44b and configured to receive the support shaft 30. Namely, the first retaining wings 42 and the second retaining wings 43 extend respectively at the first hub end portion 44a and at the second hub end portion 44b.

According to one embodiment, the base member 10 comprises anti-rotation elements 13 configured to engage at least a retaining portion 45 of a first retaining wing 42 to prevent the rotation of the fiber optical spool 40 when the fiber optical spool 40 is in the first position and to disengage the retaining portion 45 upon the fiber optical spool 40 is moved in the second position. Alternatively, anti-rotation elements 13 can be configured to engage a rating portion of the second wings 43.

According to one embodiment, the perimetral wall 12 comprises a retaining aperture 13a. Specifically, the retaining aperture 13a defines the anti-rotation elements 13. The retaining aperture 13a prevents the rotation of the fiber optical spool 40 when the fiber optical spool 40 is in the first position when it engages the retaining portion 45. The retaining aperture 13a disengages the retaining portion 45 upon the fiber optical spool 40 is moved in the second position.

The retaining portion 45 can extend from a first wing 42 along a retaining direction angled with A-A respect a radial direction R-R. It is to be noted that the retaining portion 45 extends outwardly with respect the fictitious outer circumference.

According to one embodiment, the adapter housing 50 is formed on the retaining portion 45.

According to one embodiment, the fiber optical storage equipment 1 comprises a longitudinal limiting and rotational arrangement 60 for longitudinally limiting the fiber optical spool 40 at the first and second position and allowing rotation of the fiber optical spool 40 around the support shaft 30.

The longitudinal limiting and rotational arrangement 60 comprises a first, a second and a third limiting member 61, 62, 63 to limit a sliding of the fiber optical spool 40 in the second position and to allow a rotation of the fiber optical spool 40.

The first limiting member 61 is formed on the support shaft 30 within the hollow shaft channel 32.

The second limiting member 62 extends into the hub channel 44 and spaced apart from the hub 41 along a spacing direction Y-Y perpendicular to the longitudinal direction X-X. The second limiting member 62 defines with the hub 41 an annular gap 46 configured to receive therebetween the support shaft 30. The third limiting member 63 is formed on the second limiting member 62 and is configured to engage the first limiting member 61 at the second position to limit a sliding of the fiber optical spool 40 in the second position and to allow a rotation of the fiber optical spool 40.

According to one embodiment, the first limiting member 61 comprises a flange 61a inwardly projecting in the hollow shaft channel 32 at the end shaft portion 31. The second limiting member 62 comprises a plurality of retention fingers 66 extending along the longitudinal direction X-X and spaced apart from the hub 41 between a connection end portion 66a connected to the hub 41 at the second hub end portion 44b and an opposed free retention end portion 66b. The third limiting member 63 comprises a retaining element 63b for each retention finger 66 configured to engage the flange 61a to limit the sliding of the fiber optical spool 40 at the end shaft portion 31 and to allow the relative rotation, each retaining element 63b outwardly projecting at the free retention end portion 66b towards the shaft 30.

In the second position, the retaining elements 63b abut against the flange 61a to limit the sliding and allow the rotation of the hub 41.

The hub 41 comprises a retention portion 41a inwardly projecting in the hub channel 44 from which the retention fingers 66 protrude.

Thanks to the longitudinal limiting and rotational arrangement 60 with the fingers extending from the hub, the fiber optical storage equipment 1 is simplified. It is to be noted that the retention fingers 66 can have substantially the same height of the spool height. Alternatively, the retention fingers 66 can have a height greater than the spool height.

According to one embodiment, the longitudinal limiting and rotational arrangement 60 further comprises fourth and fifth limiting member 64, 65 which prevent undesired longitudinal sliding of the fiber optical spool 40. The fourth limiting member 64 outwardly projects from the hub 41 at the first hub end portion 44a. The fifth limiting member 65 projects from the base 11 and is configured to engage the fourth limiting member 64 when the fiber optical spool 40 is in the first position to prevent longitudinal sliding of the fiber optical spool 40.

According to one embodiment, the fourth limiting member 64 comprises hub teeth 64a angularly spaced apart and the fifth limiting member 65 comprises base teeth 65a angularly spaced apart and configured to engage the hub teeth 64a. The hub teeth 64a and/or the base teeth 65a are elastically deformable to mutually engage and disengage upon application of insertion and extraction force to the fiber optical spool 40. It is to be noted that the insertion force is applied to the fiber optical spool 40 along the longitudinal direction when it moves from the second to the first position. The extraction force instead is applied to the fiber optical spool 40 along the longitudinal direction X-X when it moves from the first to the second position.

According to one embodiment, the fiber optical storage equipment 1 comprises at least one restraining element 70 configured to restrain the wound optical cable 2. Each restraining element 70 is hinged to at least one of the first and second retaining wings 42, 43.

Thanks to the restraining elements 70 as appendixes on the wings 42, 43, the restraint and containing of the optical cable is optimized after the installation, without requiring a perimetral wall or a high perimetral wall, thus providing cost and material reduction.

Each restraining element 70 can be hinged to a relative free wing end 42a, 43a. Specifically, each restraining element 70 is configured to engage the base member 10 for restraining the wound optical cable 2.

In detail, the restraining element 70 is configured to pivot with respect to the wings 42, 43 around a rotation axis.

The fiber optical storage equipment 1, comprises hinges 70a configured to connect the restraining elements 70 to the relative wing 42, 43. Therefore, the hinges 70a are arranged between the restraining elements 70 and the wings 42, 43.

According to one embodiment, the restraining element 70 extends between a hinge portion and a coupling portion 70b for the coupling with the base member 10. The hinge portion defines the hinge 70a connecting the coupling portion 70b to the wing 42, 43.

According to one embodiment, the hinge 70a has a narrowing thickness with respect to a thickness of wings 42, 43 and the coupling portion 70b. Namely, the hinge 70a is formed one piece with the fiber optical spool 40.

According to one embodiment, the hinge 70a is a living hinge.

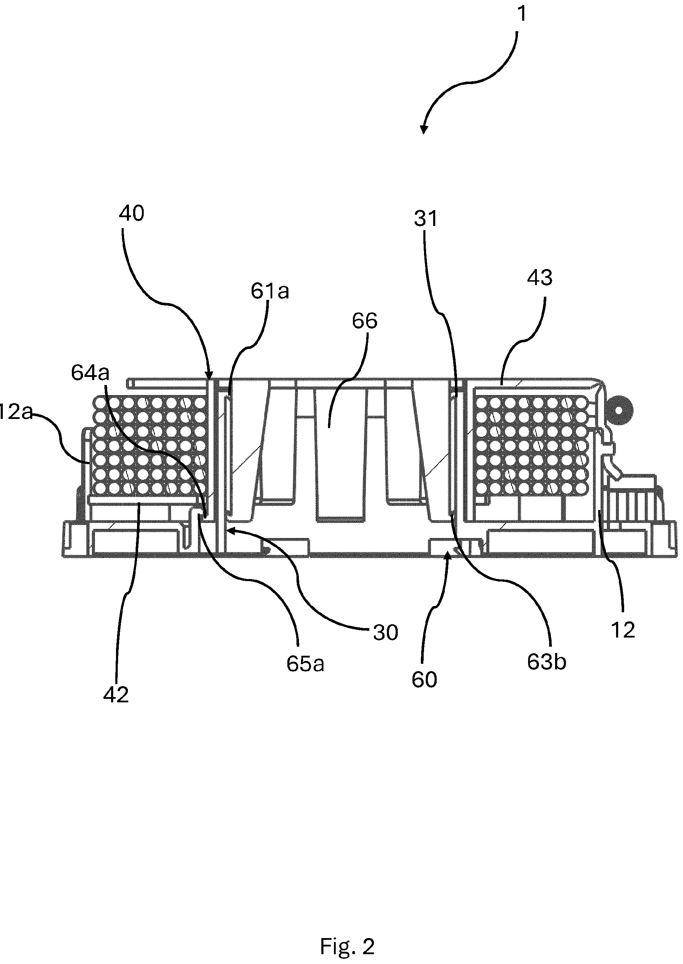

According to one embodiment, each restraining element 70 is configured to move between a restraining configuration and a rotation configuration respectively when the fiber optical spool 40 is in the first position and in the second position as shown in figures 2-4.

Namely, each restraining element 70 is configured to engage the base member 10 in the restraining configuration and to disengage the base member 10 in the rotation configuration.

According to one embodiment, each restraining element 70 is formed on a respective second retaining wing 43.

According to one embodiment, the fiber optical storage equipment 1, namely base member 10, comprises locking elements 80. The restraining elements 70 are configured to engage the locking elements 80 in restraining configuration and to disengage the locking elements 80 in the rotation configuration. Such locking elements 80 can protrude from the base 11.

The perimetral wall 12 has an inner surface 12a and an outer surface 12b. The locking elements 80 are formed on the outer surface 12b of the perimetral wall 12.

Specifically, each locking element 80 can protrude from the outer surface 12b and comprises a first coupling element 80a. The restraining elements 70 can comprise a second coupling element 72 configured to engage the first coupling element 80a in the restraining configuration. In detail, the first coupling element 80a can comprise a protrusion and the second coupling element 72 can comprise a seat configured to reversibly engage the protrusion.

According to one embodiment, a restraining element 70 comprises a connector housing 71 for retaining an optical connector 4. Namely, the connector housing 71 protrudes from the restraining element 70 at the coupling portion 70b. The connector housing 71 can extend between connector openings 71a defined by a connector base 71b and connector walls 71c projecting from the base 71b and elastically deformable to receive and retain the optical connector 4.

Thanks to the presence of the connector housing 71 on the restraining element 70 the height of the spool, of the support shaft, eventually of the cover member, and an overall height is limited and/or reduced compared to the solution with the connector in the top.

According to one embodiment, the perimetral wall 12 has one or more cable openings 15 for receiving an optical cable 2. Such cable openings 15 are angularly spaced apart and are configured to allow and to regulate an extraction length of the optical cable 2. The base module 10 comprises cable retaining members 16 externally to the perimetral wall 12 to retain the optical cable 2 passing through one of the cable openings 15. Such cable retaining members 16 are configured to fix the extraction length of the optical cable.

The cover member 20 has first openings 22 at the cable retaining members 16 for receiving the optical cable 2 passing through the cable openings 15. The cover member 20 has a second opening 23 at the adapter housing 50 for receiving an optical connector to be inserted in the optical adapter 3.

The present invention further relates to a fiber optical storage equipment assembly 100.

The fiber optical storage equipment assembly 100 comprises the fiber optical storage equipment 1. The fiber optical storage equipment assembly 100 further comprises the optical adapter 3 arranged in the adapter housing 50 and an optical cable 2 to be wound and unwound. The optical cable 2 has at one end, a connector to be connected to the optical adapter 3 and, at the other end, an optical connector 4 to be connected to a termination box.

## Claims

1. A fiber optical storage equipment (1) comprising:
- a base member (10) comprising a base (11) and a perimetral wall (12) extending upwardly from the base (11);
- a cover member (20) configured to define with the base member (10) an inner volume;
- a support shaft (30) at least in part surrounded by the perimetral wall (12) and extending into the inner volume between the base (11) and an end shaft portion (31) along a longitudinal direction (X-X) perpendicular to the base (11);
- an optical fiber spool (40) for winding and unwinding an optical cable (2), the optical fiber spool (40) being configured to longitudinally move along the support shaft (30) and to rotate around the support shaft (30), the optical fiber spool (40) being movable along the longitudinal direction (X-X) between a first position, where the optical fiber spool (40) is at least in part surrounded by the perimetral wall (12), and a second position, where the optical fiber spool (40) is longitudinally spaced apart from the perimetral wall (12), the optical fiber spool (40) being free to rotate for winding and unwinding in the second position;
wherein the optical fiber spool (40) comprises:
- an adapter housing (50) for an optical adapter (3), the adapter housing (50) projecting towards the base (11) and being proximate to the base (11) in the first position.

2. The fiber optical storage equipment (1) according to claim 1, wherein the optical fiber spool (40) comprises:
- a hub (41),
- first retaining wings (42) and second retaining wings (43) outwardly projecting from the hub (41), the first retaining wings (42) and the second retaining wings (43) being configured to accommodate therebetween an optical cable (2) wound around the hub (41);
wherein the adapter housing (50) is formed on a first retaining wing (42), the adapter housing (50) projecting from the first retaining wing (42) towards the base (11).

3. The fiber optical storage equipment (1) according to claim 2, wherein
- the support shaft (30) comprises a hollow shaft channel (32);
- the hub (41) is rotationally and slidingly coupled with the support shaft (30), the hub (41) comprising a hollow hub channel (44) extending along the longitudinal direction (X-X) from a first hub end portion (44a) arranged at the base (11) in the first position to an opposite second hub end portion (44b) and configured to receive the support shaft (30);
- the first retaining wings (42) and the second retaining wings (43) extend between the hub (41) and free wing ends (42a, 43a) respectively at the first hub end portion (44a) and at the second hub end portion (44b).

4. The fiber optical storage equipment (1) according to claim 2 or 3, wherein the perimetral wall (12) comprises a retaining aperture (13a) configured to:
- engage at least a retaining portion (45) of a first retaining wing (42) to prevent the rotation of the fiber optical spool (40) when the fiber optical spool (40) is in the first position,
- disengage the retaining portion (45) upon the fiber optical spool (40) is moved in the second position.

5. The fiber optical storage equipment (1) according to claim 3 or 4, further comprising a longitudinal limiting and rotational arrangement (60) for longitudinally limiting the fiber optical spool (40) at the first and second position and allowing rotation of the fiber optical spool (40) around the support shaft (30), the longitudinal limiting and rotation arrangement (60) comprises:
- a first limiting member (61) formed on the support shaft (30) within the hollow shaft channel (32);
- a second limiting member (62) extending into the hub channel (44) and spaced apart from the hub (41) along a spacing direction (Y-Y) perpendicular to the longitudinal direction (X-X), the second limiting member (62) defining with the hub (41) an annular gap (46) configured to receive therebetween the support shaft (30);
- a third limiting member (63) formed on the second limiting member (62) and configured to engage the first limiting member (61) at the second position to limit a sliding of the fiber optical spool (40) in the second position and to allow a rotation of the fiber optical spool (40).

6. The fiber optical storage equipment (1) according to claim 5, wherein:
- the first limiting member (61) comprises a flange (61a) inwardly projecting in the hollow shaft channel (32) at the end shaft portion (31);
- the second limiting member (62) comprises a plurality of retention fingers (66) extending along the longitudinal direction (X-X) and spaced apart from the hub (41) between a connection end portion (66a) connected to the hub (41) at the second hub end portion (44b) and an opposed free retention end portion (66b);
- the third limiting member (63) comprises a retaining element (63b) for each retention finger (66) configured to engage the flange (61a) to limit the sliding of the fiber optical spool (40) at the end shaft portion (31) and to allow the relative rotation, each retaining element (63b) outwardly projecting at the free retention end portion (66b) towards the shaft (30).

7. The fiber optical storage equipment (1) according to claim 5 or 6, wherein the longitudinal limiting and rotational arrangement (60) comprises
- a fourth limiting member (64) outwardly projecting from the hub (41) at the first hub end portion (44a);
- a fifth limiting member (65) projecting from the base (11) and configured to engage the fourth limiting member (64) when the fiber optical spool (40) is in the first position to prevent longitudinal sliding of the fiber optical spool (40).

8. The fiber optical storage equipment (1) according to any claims 3 to 7, further comprises:
- restraining elements (70) configured to restrain the wound optical cable (2) and hinged to the free wing end (42a, 43a) of at least one of the first retaining wings (42) and the second retaining wings (43), each restraining element (70) being configured to move between a restraining configuration and a rotation configuration respectively when the fiber optical spool (40) is in the first position and in the second position;
- locking elements (80), the restraining elements (70) being configured to engage the locking elements (80) in restraining configuration and to disengage the locking elements (80) in the rotation configuration.

9. The fiber optical storage equipment (1) according to claim 8, wherein:
- each restraining element (70) is formed on a respective second retaining wing (43);
- the perimetral wall (12) has an inner surface (12a) and an outer surface (12b), the locking elements (80) being formed on the outer surface (12b) of the perimetral wall (12)

10. The fiber optical storage equipment (1) according to claim 9, wherein a restraining element (70) comprises a connector housing (71) for retaining an optical connector (4).

11. The fiber optical storage equipment (1) according to any claims 2 to 10, wherein
- the second retaining wings (43) are shaped as sector of circular annulus and are angularly spaced apart;
- the first retaining wings (42) are shaped as truncated sector of circular annulus and are angularly spaced apart, each first retaining wing (42) has a radial side and a truncation side forming with a radial direction an angle in a range of 30° to 60°;
- the first retaining wings (42) are angularly offset with respect to the second retaining wings (43).

12. The fiber optical storage equipment (1) according to any claims 1 to 11, wherein the base module (10) comprises a seat (14) in the base (11) for the adapter housing (50) configured to receive the adapter housing (50) when the fiber optical spool (40) is in the first position.

13. The fiber optical storage equipment (1) according to any claims 1 to 12, wherein
- the perimetral wall (12) has one or more cable openings (15) for receiving an optical cable (2);
- the base module (10) comprises cable retaining members (16) externally to the perimetral wall (12) to retain the optical cable (2) passing through one of the cable openings (15);
- the cover member (20) has first openings (22) at the cable retaining members (16) for receiving the optical cable (2) passing through the cable openings (15);
- the cover member (20) has a second opening (23) at the adapter housing (50) for receiving an optical connector to be inserted in the optical adapter (3).

14. A fiber optical storage equipment assembly (100) comprising
- a fiber optical storage equipment (1) according to any claims 1 to 13;
- an optical adapter (3) arranged in the adapter housing (50);
- an optical cable (2) having, at one end, a connector to be connected to the optical adapter (3) and, at the other end, an optical connector (4) to be connected to a termination box.
